(19) Europäisches Patentamt / European Patent Office / Office européen des brevets

(11) **EP 4 696 738 A1**

(12) **EUROPEAN PATENT APPLICATION**
published in accordance with Art. 153(4) EPC

(43) Date of publication:
**18.02.2026 Bulletin 2026/08**

(21) Application number: **23933088.9**

(22) Date of filing: **22.06.2023**

(51) International Patent Classification (IPC):
*C08J 3/18* (2006.01)     *B29B 7/38* (2006.01)
*C08J 11/24* (2006.01)

(52) Cooperative Patent Classification (CPC):
**B29B 7/38; B29B 17/04; C08J 3/18; C08J 11/24**

(86) International application number:
**PCT/JP2023/023238**

(87) International publication number:
**WO 2024/214313 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.04.2023 JP 2023065078**

(71) Applicant: **Repy Plus Co.,Ltd.**
**Yokohama-shi, Kanagawa 230-0061 (JP)**

(72) Inventor: **SHIONO, Takeo**
**Yokohama-shi, Kanagawa 230-0061 (JP)**

(74) Representative: **Klunker IP**
**Patentanwälte PartG mbB**
**Destouchesstraße 68**
**80796 München (DE)**

(54) **METHOD FOR PRODUCING POLYMER COMPOUND**

(57) A method of thermoplasticizing crosslinked polyethylene to produce a polymer compound with high tensile strength and tensile elongation is provided. An additive is mixed to crosslinked polyethylene and first non-crosslinked polyethylene. The crosslinked polyethylene is thermoplasticized under shear stress at a shear rate of 10,000 to 15,000 s$^{-1}$ for 5 to 30 seconds. The additive contains at least one non-crosslinked polymer compound selected from ethylene vinyl acetate copolymer, ethylene methyl acrylate copolymer, ethylene ethyl acrylate copolymer, ethylene methyl methacrylate copolymer, or ethylene ethyl methacrylate copolymer. This allows the resulting polymer compound to have high tensile strength and tensile elongation.

Fig.3

START
↓
S1 PREPARATION PROCESS
↓
S2 MIXING PROCESS
↓
S3 FIRST FEEDING PROCESS
↓
S4 THERMOPLASTICIZATION PROCESS
↓
S5 SECOND FEEDING PROCESS
↓
S6 KNEADING PROCESS
↓
S7 DISCHARGE PROCESS
↓
POLYMER COMPOUND

EP 4 696 738 A1

**Description**

TECHNICAL FIELD

The present invention relates to a method of thermoplasticizing crosslinked polyethylene to produce a polymer compound with high tensile strength and tensile elongation.

BACKGROUND ART

Crosslinked polyethylene is polyethylene with improved heat resistance and impact resistance by adding a crosslinking agent to polyethylene to form intermolecular bonds in a molecular chain of a polymer in a three-dimensional network structure. Crosslinked polyethylene is broadly classified into peroxide crosslinked polyethylene, which is crosslinked by organic peroxides, and silane crosslinked polyethylene, which is crosslinked by silanol condensation catalysts.

Crosslinked polyethylene had been very difficult to recycle because it does not melt easily when heated. In recent years, many studies have been conducted on how to thermoplasticize crosslinked polyethylene for material recycling. Thermoplasticization is a technology to obtain recycled materials that have become thermoplastic by breaking down a crosslinked structure of crosslinked polyethylene by applying appropriate heat and shear stress to the crosslinked polyethylene to reduce its molecular weight. However, it is difficult to properly break crosslinking points of crosslinked polyethylene due to its high binding energy, making it difficult to obtain high molecular compounds with high tensile strength and tensile elongation.

Various methods of thermoplasticizing crosslinked polyethylene for reuse have been investigated. For example, a method of processing a polymer compound in which a small amount of virgin polyethylene is added and a crosslinked polyethylene mixture with different crosslinking methods is thermoplasticized to obtain a high-quality product with little decrease in molecular weight (Patent Document 1), and a material recycling method using thermoplasticizing polyethylene resin containing silane crosslinked polyethylene by adding an aliphatic compound (Patent Document 2) are known.

Claims of Patent Document 1 state a method of processing a polymer compound, comprising the steps of feeding a polymer compound and an agent to a reaction extruder, and processing them by reacting at 240-380°C in a shear kneading zone inside the extruder. The polymer compound and the agent are reacted in the reaction extruder to thermoplasticize the polymer compound to produce a polymer treated product.

Patent Document 2 discloses a material recycling method in which silane crosslinked polyethylene resin is mixed with an additive selected from aliphatic compounds with a boiling point of 300°C or higher that have a carbon number of 16 or more and one or more hydroxyl groups, and then shear stress is applied to thermoplasticize the mixture to obtain a material-recyclable polymer compound.

PRIOR ART

Patent Documents

Patent Document 1: JP2009-197138A
Patent Document 2: JP2021-024904A

SUMMARY OF INVENTION

Problems to be solved by Invention

In the method described in Patent Document 1, the polymer compound and the agent were fed into the reaction extruder and reacted at 240-380°C in the shear kneading zone inside the extruder, resulting in the data in Table 3 of Patent Document 1 ([0093] in Patent Document 1). In this data, the obtained polymer compound had a tensile property Tb (referred to as tensile strength in this application) of less than 15 MPa and a tensile property Eb (referred to as tensile elongation in this application) of 450% or less.

Table 1 of Patent Document 2 ([0060] in Patent Document 2) shows that tensile strength of the polymer compound obtained by the method described in Patent Document 2 is 17 MPa or higher, but the maximum tensile elongation thereof is as low as 320%.

As described above, the tensile strength or tensile elongation values of the polymer compound obtained in the conventional thermoplasticization methods of crosslinked polyethylene are low, making it unsuitable as a material requiring both high tensile strength and tensile elongation. Such materials can be blow-molded or foam-molded materials, for example.

The present invention was made to eliminate the aforementioned disadvantages and to provide a method of producing a polymer compound that can be suitably used even in applications requiring both high tensile strength and high tensile elongation (e.g., blow molding or foam molding).

Means for solving the Problems

One aspect of the present invention is a method of producing a polymer compound by thermoplasticizing crosslinked polyethylene by an extruder, comprising the steps of:

mixing the crosslinked polyethylene, first non-crosslinked polyethylene and an additive to generate a mixture;
thermoplasticizing the crosslinked polyethylene by applying heat and shear stress to the mixture fed from a first feeding section of the extruder; and
kneading the mixture after the thermoplasticizing step and second non-crosslinked polyethylene fed from a second feeding section of the extruder;
wherein an amount of the first non-crosslinked polyethylene in the mixing step is 1 to 5 parts by weight per 100 parts by weight of the crosslinked polyethylene,
wherein the additive includes at least one non-crosslinked polymer compound selected from ethylene vinyl acetate copolymer, ethylene methyl acrylate copolymer, ethylene ethyl acrylate copolymer, ethylene methyl methacrylate copolymer, or ethylene ethyl methacrylate copolymer,
wherein an amount of the additive is 0.1 to 3 parts by weight per 100 parts by weight of the crosslinked polyethylene,
wherein the shear stress in the thermoplasticizing step is generated at a shear rate of 10,000 to 15,000 $s^{-1}$ for 5 to 30 seconds, and
wherein an amount of the second non-crosslinked polyethylene fed in the kneading step is 50 to 150 parts by weight per 100 parts by weight of the crosslinked polyethylene.

A melt flow index of the additive may be 1 to 30 g/10 min, for example.
Tensile strength of the polymer compound after the kneading step may be 18 MPa or higher and tensile elongation thereof may be over 450%.

EFFECT OF INVENTION

According to the present invention, a polymer compound with high tensile strength and tensile elongation can be obtained by using an additive containing at least one non-crosslinked polymer compound selected from ethylene vinyl acetate copolymer, ethylene methyl acrylate copolymer, ethylene ethyl acrylate copolymer, ethylene methyl methacrylate copolymer, or ethylene ethyl methacrylate copolymer. The resulting polymer compound can be used for applications requiring high tensile strength and tensile elongation, such as blow molding and foam molding.

BRIEF DESCRIPTION OF DRAWINGS

Fig. 1 is a schematic cross-sectional view showing an internal structure of a twin-screw extruder according to an embodiment of the present invention;
Fig. 2 is a partial cross-sectional view showing two screws arranged inside a cylinder of the twin-screw extruder according to the embodiment of the present invention in plan view; and
Fig. 3 is a process diagram of a method of producing a polymer compound according to an embodiment of the present invention.

DESCRIPTION OF EMBODIMENTS

The following is a description of embodiments of the present invention with reference to the accompanying drawings.

<Description of Apparatus>

Thermoplasticization of crosslinked polyethylene is performed using an extruder, which can be broadly classified into a single-screw extruder with only one screw, and a twin-screw extruder with two screws. Twin-screw extruders have the following advantages over single-screw extruders: they are more efficient in uniformly mixing different components such as additives and fillers, they generate less heat due to less frictional heat, and they can apply greater shear stress to a material due to a more complex internal material flow. For these reasons, a twin-screw extruder was used in the present study.

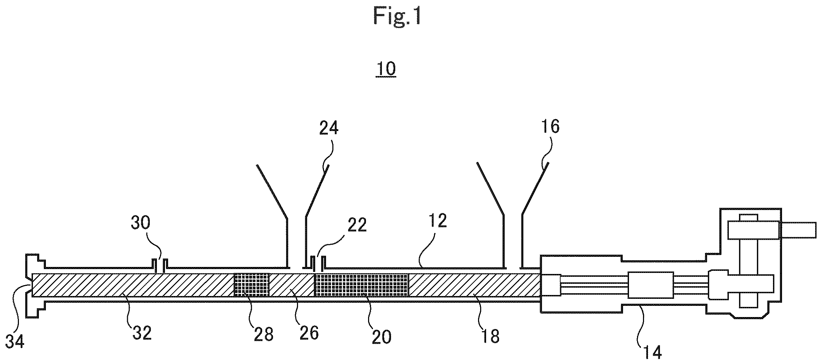

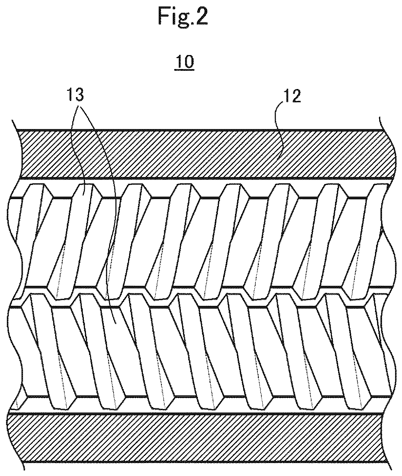

Fig. 1 is a schematic cross-sectional view showing an internal structure of a twin-screw extruder 10 according to an embodiment of the present invention. Fig. 2 is a partial cross-sectional view showing two screws 13 arranged inside a cylinder 12 of the twin-screw extruder 10 in plan view.

As shown in Fig. 1, the twin-screw extruder 10 has the cylinder 12 extending from a drive section 14. The cylinder 12 is provided with a first feeding section 16 and a second feeding section 24 for feeding polyethylene and other materials. Further, the cylinder 12 is provided with a first transport section 18, a first kneading section 20, a second transport section 26, a second kneading section 28, and a third transport section 32 in series. Each of the first transport section 18, the first kneading section 20, the second transport section 26, the second kneading section 28, and the third transport section 32 has a pair of two screws 13. The screws in the first transport section 18, the second transport section 26, and the third transport section 32 are shaped suitable for transport, while the screws in the first kneading section 20 and the second kneading section 28 are shaped suitable for thermoplasticization.

The drive section 14 is equipped with a motor (not shown), and the motor in the drive section 14 is connected to the screws in the first transport section 18, and furthermore, each screw is connected to an adjacent screw. Therefore, when the motor in drive section 14 operates, the respective screws in the first transport section 18, the first kneading section 20, the second transport section 26, the second kneading section 28, and the third transport section 32 rotate simultaneously. Further, a heating means such as a heater (not shown) is provided to maintain the inside of the cylinder 12 at a predetermined temperature. Note that in Fig. 1, the first transport section 18, the second transport section 26, and the third transport section 32 are shown with hatching, and the first kneading section 20 and the second kneading section 28 are shown as a group of small squares, but these are for convenience only to indicate the location of each section.

The first feeding section 16 is located above the first transport section 18. A mixture mixed outside the twin-screw extruder 10 is fed through the first feeding section 16, heated and melted in the first transport section 18 heated by the heater or the like, and transferred to the first kneading section 20.

The first kneading section 20 has narrow widths between the screws and the cylinder to produce high shear stress. A first degassing section 22 is provided above the first kneading section 20. The mixture transferred from the first transport section 18 is subjected to shear stress and heat in the first kneading section 20, which thermoplasticizes crosslinked polyethylene in the mixture. A gas generated at that time are discharged outside the twin-screw extruder 10 through the first degassing section 22. The thermoplasticized mixture is then transferred to the second transport section 26.

Here, shear stress $\tau$ is stress that acts when one surface and another surface inside an object are deformed in parallel directions that are mutually different from each other. If a force applied to deform the object is expressed as F and a deformed area is expressed as A, then shear stress is expressed as F/A, and the units thereof are indicated as $\tau$

$$\text{(Pascal (Pa))} = \text{F (Newton (N))} / \text{A (area (m}^2\text{))}.$$

The shear stress $\tau$ (Pa) is expressed as the product of shear rate $\gamma$ (s$^{-1}$) and viscosity of polyethylene $\mu$ (Pa*s). In other words, $\tau = \mu\gamma$. The unit of shear rate $\gamma$ is expressed as the reciprocal of a second (1/s). Since the viscosity $\mu$ of polyethylene is determined by the type of polyethylene and temperature, the shear stress $\tau$ is generally controlled by the shear rate.

The shear rate $\gamma$ (s$^{-1}$) is expressed as $\gamma$ = v/t based on clearance t (mm) between the cylinder and the screws of the extruder and velocity v (mm/s) at the tip tops of each screw. The velocity v at the tip tops of each screw is expressed as v = $\pi$ND/60 when screw rotation is N (rpm) and its diameter is D (mm). In other words, the shear rate is expressed as $\gamma$ = $\pi$ ND/60t. Note that $\pi$ represents the circle ratio.

The second transport section 26 is connected to the first kneading section 20 and the second kneading section 28. The second feeding section 24 is located above the second transport section 26. Individual inputs from the second feeding section 24 are melt in the second transport section 26, which is heated by the heater or the like, and are transferred to the second kneading section 28 together with the mixture transferred from the first kneading section 20.

The second kneading section 28 is connected to the second transport section 26 and the third transport section 32, and has two screws that produce mixing and kneading actions. The second kneading section 28 can uniformly knead the thermoplasticized mixture transferred from the second transport section 26 and the input material. The kneaded polymer compound is then transferred to the third transport section 32. Here, the word "mixing" means mixing two or more materials in general. Further, the word "kneading" means mixing at least one material of relatively high viscosity (in this case, such as non-crosslinked polyethylene in a molten state) with another material and then kneading it.

The third transport section 32 is connected to the second kneading section 28 and a discharge section 34. The second degassing section 30 is located above the third transport section 32, and a gas generated inside the cylinder 12 is discharged to the outside therethrough. The polymer compound transferred from the second kneading section 28 passes through the third transport section 32 and is discharged from the discharge section 34 to the outside.

<Description of Processes>

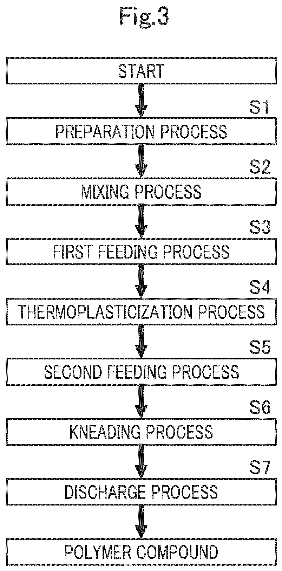

Next, a method of generating a polymer compound in accordance with an embodiment of the present invention will be described with reference to Fig. 3. Fig. 3 is a process diagram of a method of generating a polymer compound in accordance with an embodiment of the present invention.

(Preparation Process: S1)

At the start, the twin-screw extruder 10 is turned on. Then the motor in the drive section 14 of the twin-screw extruder 10 rotates, and the respective screws of the first transport section 18 connected to the drive section 14, the first kneading section 20, the second transport section 26, the second kneading section 28, and the third transport section 32 rotate. At the same time, a heating mechanism heats the inside of the cylinder 12 to a predetermined temperature, which is maintained for a predetermined time until the apparatus is sufficiently stable.

As mentioned above, the shear rate is expressed by the formula $\gamma = \pi ND/60t$. The screw rotation speed is set so that the shear rate in the first kneading section 20 is 10,000 to 15,000 $s^{-1}$, preferably 10,000 $s^{-1}$. If the shear stress in the first kneading section 20 is less than 10,000 $s^{-1}$, thermoplasticization does not progress sufficiently. At a shear rate exceeding 15,000 $s^{-1}$, thermoplasticization progresses too much, and physical properties of the resulting polymer compound are significantly reduced.

Preferably, the shear stress is generated for 5 to 30 seconds. Thermoplasticization does not progress sufficiently in less than 5 seconds, and shear stress applied for longer than 30 seconds significantly reduces the physical properties of the resulting polymer compound.

The temperature in the first kneading section 20 is set at 300-400°C, preferably 350°C. If the shear rate in the first kneading section 20 is less than 10,000 $s^{-1}$, sufficient shear stress is not obtained and thermoplasticization of the crosslinked polyethylene does not progress sufficiently. If the shear stress exceeds 15,000 $s^{-1}$, the shear stress becomes too high and the physical properties of the thermoplasticized polymer compound decrease significantly. Furthermore, if the temperature in the first kneading section 20 is less than 250°C, the thermoplasticization reaction does not proceed, and if the temperature exceeds 400°C, the polymer compound is thermally degraded, and the physical properties are greatly reduced.

(Mixing Process: S2)

Next, crosslinked polyethylene, first non-crosslinked polyethylene, and an additive are mixed outside the twin-screw extruder 10 to produce a mixture. Preferably, at this time, the first non-crosslinked polyethylene is mixed at a ratio of 1 to 5 parts by weight and the additive at a ratio of 0.1 to 3 parts by weight per 100 parts by weight of the crosslinked polyethylene.

Since the first non-crosslinked polyethylene plays the role of a lubricant, a quantity of less than one part by weight is undesirable because lubricating effect is impaired, and the twin-screw extruder is overloaded. Further, if the amount of the first non-crosslinked polyethylene is greater than 5 parts by weight, the thermoplasticization reaction is inhibited.

Furthermore, if the amount of the additive is less than 0.1 parts by weight, the thermoplasticization reaction will not proceed, and if the amount is greater than 3 parts by weight, the physical properties of the final polymer compound will decrease.

The additive contains at least one non-crosslinked polymer compound selected from ethylene vinyl acetate copolymer, ethylene methyl acrylate copolymer, ethylene ethyl acrylate copolymer, ethylene methyl methacrylate copolymer, or ethylene ethyl methacrylate copolymer. In particular, at least one of ethylene vinyl acetate copolymer (EVA) or ethylene ethyl acrylate copolymer (EEA) is preferably included.

Ethylene vinyl acetate copolymer (EVA) is a copolymer of ethylene and vinyl acetate, with vinyl acetate usually accounting for 10 to 50% by weight and the rest being ethylene. Preferably, the vinyl acetate content of ethylene vinyl acetate copolymer (EVA) used in the present invention is 20 to 40%. If less than 20%, the thermoplasticizing effect is reduced, and if more than 40%, ethylene vinyl acetate copolymer (EVA) is not well mixed with polyethylene.

Ethylene ethyl acrylate copolymer (EEA) is resin synthesized by polymerization of ethylene and ethyl acrylate. Preferably, the ethyl acrylate content of ethylene ethyl acrylate copolymer (EEA) used in the present invention is 10 to 30%.

Less than 10% is undesirable because the thermoplasticizing effect is reduced, and more than 30% is undesirable because EEA does not mix well with polyethylene.

Preferably, melt flow indexes of ethylene vinyl acetate copolymer (EVA) and ethylene ethyl acrylate copolymer (EEA) are 1 to 30 g/10 min. If the melt flow indexes are less than 1 g/10 min, they do not mix well with crosslinked polyethylene and thermoplasticization does not proceed. If the melt flow indexes exceed 30 g/10 min, the physical properties of the resulting polymer compound will decrease.

Here, the melt flow index is a measure of flowability of thermoplastic resin when melted. It is obtained by extruding resin from a metal cylinder with a small hole at a certain temperature and pressure and converting it into grams per 10 minutes.

(First Feeding Process: S3)

The mixture of the crosslinked polyethylene, the first non-crosslinked polyethylene and the additive is fed from the first feeding section 16, heated and melted in the first transport section 18 while rotating around the twin screws, and introduced into the first kneading section 20.

(Thermoplasticization Process: S4)

The mixture is subjected to shear stress and heat in the first kneading section 20, and crosslinking points of the crosslinked polyethylene are cut and thermoplasticized. A gas generated during the thermoplasticization process is discharged out of the cylinder 12 from the first degassing section 22 located above the first kneading section 20. The pressure in the first kneading section 20 becomes close to atmospheric pressure because the generated gas is discharged.

(Second Feeding Process: S5)

Second non-crosslinked polyethylene is fed from the second feeding section 24 and introduced into the second kneading section 28 through the second transport section 26 together with the thermoplasticized mixture in the first kneading section 20. Preferably, the second non-crosslinked polyethylene is 50 to 150 parts by weight to 100 parts by weight of the crosslinked polyethylene fed from the first dosing section 16. Note that the first non-crosslinked polyethylene and the second non-crosslinked polyethylene may be the same or different materials.

If the amount of the second non-crosslinked polyethylene fed from the second feeding section 24 is less than 50 parts by weight, the physical properties of the resulting polymer compound are low, and defects are likely to occur in the molded product. If the amount is more than 150 parts by weight, the physical properties of the resulting polymer compound will be low, and defects are likely to occur in the molded product.

(Kneading Process: S6)

The thermoplasticized mixture and the second non-crosslinked polyethylene fed from the second feeding section 24 are mixed and kneaded in the second kneading section 28 to obtain a uniform polymer compound.

(Discharge Process: S7)

The polymer compound then passes through the third transport section 32 and is discharged from the discharge section 34 to the outside of the twin-screw extruder 10 to obtain the polymer compound.

The polymer compound obtained as described above has excellent moldability and can be used for applications requiring physical strength, such as blow molding and foam molding, because the tensile strength can be 18 MPa or higher and the tensile elongation can be over 450%.

The polymer compound obtained by the present invention can be used for both press molding and injection molding, resulting in molded products with high strength, high heat resistance, and high impact strength.

The following examples and comparative examples demonstrate the results of the polymeric compounds, but these examples do not limit the invention.

[Tensile and Elongation Tests]

Tensile and elongation tests were performed on polymer compounds. The tensile and elongation testing equipment used was an Autograph AGS system manufactured by Shimadzu Corporation. Each resulting polymer compound was pressed into a 1 mm-thick sheet and punched into a dumbbell No. 3 shape in accordance with Japanese Industrial Standards (JIS) K6922-2, and the tensile test was performed using the tensile testing equipment at a speed of 50 mm/min.

[Gel Fraction]

For gel fraction, each resulting polymer compound was extracted in boiling hot xylene for 8 hours according to JIS K6796. Then, the tested polymer compound was weighed after vacuum drying at 140°C for 3 hours, and the gel fraction was calculated from the ratio relative to the weight before extraction using the following formula.

Gel fraction (%) = (weight after extraction (g) / weight before extraction (g)) * 100

The gel fraction of crosslinked polyethylene used as raw material ranged from 65 to 85%.
Next, Examples 1-14 and Comparative examples 1-8 will be described in detail.

[Table 1]

| No. | Composition of mixture from 1st feeding section (pbw) Cross-linked PE | Non-cross-linked PE | Additive EVA | Additive EEA | Qty. from 1st feeding section (pbw) Mixture | Condition of 1st kneading section Temp. (°C) | Max. shear rate (s⁻¹) | Max. shear time (s) | Qty. from 2nd feeding section (pbw) Non-cross-linked PE | Tensile strength (MPa) | Elongation (%) | Gel fraction (%) |
|---|---|---|---|---|---|---|---|---|---|---|---|---|
| EXAMPLES 1 | 100 | 2 | 0.1 | - | 100 | 350 | 10,000 | 15 | 100 | 20 | 545 | 19 |
| 2 | 100 | 2 | 0.5 | - | 100 | 350 | 10,000 | 15 | 100 | 21 | 576 | 13 |
| 3 | 100 | 2 | 1 | - | 100 | 350 | 10,000 | 15 | 100 | 22 | 528 | 18 |
| 4 | 100 | 2 | 2 | - | 100 | 350 | 10,000 | 15 | 100 | 21 | 504 | 14 |
| 5 | 100 | 2 | 3 | - | 100 | 350 | 10,000 | 15 | 100 | 20 | 556 | 19 |
| 6 | 100 | 2 | - | 0.1 | 100 | 350 | 10,000 | 15 | 100 | 20 | 534 | 18 |
| 7 | 100 | 2 | - | 0.5 | 100 | 350 | 10,000 | 15 | 100 | 21 | 540 | 15 |
| 8 | 100 | 2 | - | 1 | 100 | 350 | 10,000 | 15 | 100 | 22 | 536 | 17 |
| 9 | 100 | 2 | - | 2 | 100 | 350 | 10,000 | 15 | 100 | 22 | 564 | 15 |
| 10 | 100 | 2 | - | 3 | 100 | 350 | 10,000 | 15 | 100 | 21 | 568 | 19 |
| 11 | 100* | 2 | 1 | - | 100 | 350 | 10,000 | 15 | 100 | 19 | 754 | 5 |
| 12 | 100* | 2 | 2 | - | 100 | 350 | 10,000 | 15 | 100 | 18 | 530 | 9 |
| 13 | 100* | 2 | 3 | - | 100 | 350 | 10,000 | 15 | 100 | 18 | 650 | 8 |
| 14 | 100 | 2 | 1 | 1 | 100 | 350 | 10,000 | 15 | 100 | 20 | 600 | 15 |
| COMPARATIVE EXAMPLES 1 | 100 | 2 | - | - | 100 | 350 | 10,000 | 15 | 100 | 15 | 84 | 45 |
| 2 | 100 | 2 | 0.05 | - | 100 | 350 | 10,000 | 15 | 100 | 14 | 119 | 40 |
| 3 | 100 | 2 | 5 | - | 100 | 350 | 10,000 | 15 | 100 | 16 | 332 | 35 |
| 4 | 100 | 2 | - | 0.05 | 100 | 350 | 10,000 | 15 | 100 | 15 | 348 | 41 |
| 5 | 100 | 2 | - | 5 | 100 | 350 | 10,000 | 15 | 100 | 15 | 358 | 34 |
| 6 | 100* | 2 | - | - | 100 | 350 | 10,000 | 15 | 100 | 16 | 350 | 29 |
| 7 | 100* | 5 | - | - | 100 | 350 | 10,000 | 15 | 100 | 13 | 250 | 35 |
| 8 | 100* | 10 | - | - | 100 | 350 | 10,000 | 15 | 100 | 14 | 220 | 40 |

```
EVA: ethylene vinyl acetate copolymer

EEA: ethylene ethyl acrylate copolymer

100*: use of peroxide crosslinked polyethylene
```

Examples 1 through 5 will be described below. Each of Examples 1-5 was made by mixing 100 parts by weight (pbw) of silane crosslinked polyethylene with 2 parts by weight of first non-crosslinked polyethylene and non-crosslinked ethylene vinyl acetate copolymer (EVA) as an additive in the proportions shown in Table 1 to form a mixture. Then, the polymer compound was obtained after thermoplasticization by the twin-screw extruder according to the processes described above, and gel fraction, tensile strength, and tensile elongation were measured.

(Example 1)

The twin-screw extruder 10 shown in Fig. 1 was used to set the temperature of the first kneading section to 350°C, the maximum shear rate to 10,000 $s^{-1}$, and the maximum shear time to 15 s (S1: Preparation process in Fig. 3). Then, a mixture was obtained by mixing 100 parts by weight (pbw) of silane crosslinked polyethylene with 2 parts by weight of first non-crosslinked polyethylene (non-crosslinked PE) and 0.1 parts by weight of ethylene vinyl acetate copolymer (EVA) as an additive (S2: Mixing process in Fig. 3). The mixture was then fed into the twin-screw extruder 10 from the first feeding section 16 (S3: First feeding process in Fig. 3). The mixture was then kneaded for 15 seconds in the first kneading section 20 to produce a mixture in which the silane crosslinked polyethylene was thermoplasticized (S4: Thermoplasticization process in Fig. 3). Next, 100 parts by weight of the second non-crosslinked polyethylene was fed from the second feeding section 24 (S5: Second feeding process in Fig. 3). The thermoplasticized mixture and the second non-crosslinked polyethylene fed from the second feeding section 24 were transferred from the second transport section 26 to the second kneading section 28, kneaded to form a uniform polymer compound (S6: Kneading process in Fig. 3), and discharged through the third transport section 32 from the discharge section 34 to obtain the resulting polymer compound (S7: Discharge process in Fig. 3). The obtained polymer compound had gel fraction of 19%, tensile strength of 20 MPa, and elongation of 545%.

(Example 2)

The polymer compound was tested in the same manner as in Example 1, except that 0.5 part by weight of ethylene vinyl acetate copolymer (EVA) was used as an additive. The obtained polymer compound had gel fraction of 13%, tensile strength of 21 MPa, and elongation of 576%.

(Example 3)

The polymer compound was tested in the same manner as in Example 1, except that 1 part by weight of ethylene vinyl acetate copolymer (EVA) was used as an additive. The obtained polymer compound had gel fraction of 18%, tensile strength of 22 MPa, and elongation of 528%.

(Example 4)

The polymer compound was tested in the same manner as in Example 1, except that 2 parts by weight of ethylene vinyl acetate copolymer (EVA) was used as an additive. The obtained polymer compound had gel fraction of 14%, tensile strength of 21 MPa, and elongation of 504%.

(Example 5)

The polymer compound was tested in the same manner as in Example 1, except that 3 parts by weight of ethylene vinyl acetate copolymer (EVA) was used as an additive. The obtained polymer compound had gel fraction of 19%, tensile strength of 20 MPa, and elongation of 556%.

From the results of Examples 1-5, the polymer compounds with gel fraction of 13-19%, tensile strength of 20-22 MPa, and tensile elongation of 504-576% were obtained by mixing 0.1-3 parts by weight of ethylene vinyl acetate copolymer (EVA) as an additive and thermoplasticizing the mixture.

Examples 6 through 10 will be described below. In Examples 6-10, silane crosslinked polyethylene, first non-crosslinked polyethylene, and 0.1 to 3 parts by weight of ethylene ethyl acrylate copolymer (EEA) as an additive were mixed to form a mixture. Then, gel fraction, tensile strength, and elongation of each polymer compound obtained by thermoplasticizing the silane crosslinked polyethylene were measured.

(Example 6)

The polymer compound was tested in the same manner as in Example 1, except that 0.1 weight part of ethylene ethyl acrylate copolymer (EEA) was used as an additive. The obtained polymer compound had gel fraction of 18%, tensile strength of 20 MPa, and elongation of 534%.

(Example 7)

The polymer compound was tested in the same manner as in Example 1, except that 0.5 part by weight of ethylene ethyl acrylate copolymer (EEA) was used as an additive. The obtained polymer compound had gel fraction of 15%, tensile strength of 21 MPa, and elongation of 540%.

(Example 8)

The polymer compound was tested in the same manner as in Example 1, except that 1 part by weight of ethylene ethyl acrylate copolymer (EEA) was used as an additive. The obtained polymer compound had gel fraction of 17%, tensile strength of 22 MPa, and elongation of 536%.

(Example 9)

The polymer compound was tested in the same manner as in Example 1, except that 2 parts by weight of ethylene ethyl acrylate copolymer (EEA) was used as an additive. The obtained polymer compound had gel fraction of 15%, tensile strength of 22 MPa, and elongation of 564%.

(Example 10)

The polymer compound was tested in the same manner as in Example 1, except that 3 parts by weight of ethylene ethyl acrylate copolymer (EEA) was used as an additive. The obtained polymer compound had gel fraction of 19%, tensile strength of 21 MPa, and elongation of 568%.

As shown in Examples 6-10, the polymer compounds with gel fraction of 15-19%, tensile strength of 20-22 MPa, and tensile elongation of 534-568% were obtained by mixing 0.1-3 parts by weight of ethylene ethyl acrylate copolymer (EEA) as an additive to form the mixture and thermoplasticizing the mixture.

Examples 11 through 13 will be described below. In Examples 11-13, peroxide-crosslinked polyethylene, first non-crosslinked polyethylene, and 1 to 3 parts by weight of ethylene vinyl acetate copolymer (EVA) as an additive were mixed to form a mixture. Then, gel fraction, tensile strength, and elongation of the polymer compounds obtained by thermoplasticizing the peroxide-crosslinked polyethylene were measured.

(Example 11)

A mixture of 100 parts by weight of peroxide crosslinked polyethylene, 2 parts by weight of first non-crosslinked polyethylene, and 1 part by weight of ethylene vinyl acetate copolymer (EVA) as an additive were mixed to form a mixture (S2 in Fig. 3). Otherwise, the test was conducted as in Example 1, and the polymer compound was obtained. The obtained polymer compound had gel fraction of 5%, tensile strength of 19 MPa, and elongation of 754%.

(Example 12)

The polymer compound was tested in the same manner as in Example 1, except that 2 parts by weight of ethylene vinyl acetate copolymer (EVA) was used as an additive. The obtained polymer compound had gel fraction of 9%, tensile strength of 18 MPa, and elongation of 530%.

(Example 13)

The polymer compound was tested in the same manner as in Example 1, except that 3 parts by weight of ethylene vinyl acetate copolymer (EVA) was used as an additive. The obtained polymer compound had gel fraction of 8%, tensile strength of 18 MPa, and elongation of 650%.

Example 14 will be described below. In Example 14, 100 parts by weight of silane crosslinked polyethylene, 2 parts by weight of first non-crosslinked polyethylene, and 1 part by weight of ethylene vinyl acetate copolymer (EVA) and 1 part by weight of ethylene ethyl acrylate copolymer (EEA) as additives were mixed to form a mixture. Otherwise, the test was conducted as in Example 1, and the polymer compound was obtained. The obtained polymer compound had gel fraction of 15%, tensile strength of 20 MPa, and elongation of 600%.

As shown in Examples 1-14, the polymer compounds with tensile strength of 18 MPa or higher, and tensile elongation of higher than 450% were obtained by mixing 0.1-3 parts by weight of ethylene vinyl acetate copolymer (EVA) and/or ethylene ethyl acrylate copolymer (EEA) as additives to form the mixtures and thermoplasticizing the mixtures. The gel fraction was 20% or lower in each Example.

Comparative Examples 1-8 will be described below. Comparative Example 1 was silane crosslinked polyethylene with no additive, and Comparative Examples 2 and 3 used 0.05 and 5 parts by weight of ethylene vinyl acetate copolymer (EVA) as an additive, respectively. Comparative Examples 4 and 5 used 0.05 and 5 parts by weight of ethylene ethyl acrylate copolymer (EEA) as an additive, respectively. In Comparative Examples 6-8, the mixtures were generated using 2, 5, and 10 parts by weight, respectively, of first non-crosslinked polyethylene (non-crosslinked PE) under conditions of peroxide-crosslinked polyethylene with no additive, and the polymer compound was generated under conditions similar to Example 1.

(Comparative Example 1)

No additive was used, and the mixture was obtained by mixing 100 parts by weight of silane crosslinked polyethylene and 2 parts by weight of first non-crosslinked polyethylene (S2 in Fig. 3). Otherwise, the test was conducted as in Example 1, and the polymer compound was obtained. The obtained polymer compound had gel fraction of 45%, tensile strength of 15 MPa, and elongation of 84%.

(Comparative Example 2)

The polymer compound was tested in the same manner as in Example 1, except that 0.05 part by weight of EVA was used as an additive. The obtained polymer compound had gel fraction of 40%, tensile strength of 14 MPa, and elongation of 119%.

(Comparative Example 3)

The polymer compound was tested in the same manner as in Example 1, except that 5 parts by weight of EVA was used as an additive. The obtained polymer compound had gel fraction of 35%, tensile strength of 16 MPa, and elongation of 332%.

(Comparative Example 4)

The polymer compound was tested in the same manner as in Example 1, except that 0.05 part by weight of EEA was used as an additive. The obtained polymer compound had gel fraction of 41%, tensile strength of 15 MPa, and elongation of 348%.

(Comparative Example 5)

The polymer compound was tested in the same manner as in Example 1, except that 5 parts by weight of EEA was used as the additive. The obtained polymer compound had gel fraction of 34%, tensile strength of 15 MPa, and elongation of 358%.

(Comparative Example 6)

A mixture of 100 parts by weight of peroxide-crosslinked polyethylene and 2 parts by weight of first non-crosslinked polyethylene was obtained with no additive (S2 in Fig. 3). Otherwise, the test was conducted as in Example 1, and the polymer compound was obtained. The obtained polymer compound had gel fraction of 29%, tensile strength of 16 MPa, and elongation of 350%.

(Comparative Example 7)

A mixture of 100 parts by weight of peroxide-crosslinked polyethylene and 5 parts by weight of first non-crosslinked polyethylene was obtained with no additive (S2 in Fig. 3). Otherwise, the test was conducted as in Example 1, and the polymer compound was obtained. The obtained polymer compound had gel fraction of 35%, tensile strength of 13 MPa, and elongation of 250%.

(Comparative Example 8)

A mixture of 100 parts by weight of peroxide-crosslinked polyethylene and 10 parts by weight of first non-crosslinked polyethylene was obtained with no additive (S2 in Fig. 3). Otherwise, the test was conducted as in Example 1, and the polymer compound was obtained. The obtained polymer compound had gel fraction of 40%, tensile strength of 14 MPa, and elongation of 220%.

As shown in Comparative Examples 1 and 6-8, when thermoplasticization was performed using only silane crosslinked polyethylene or peroxide crosslinked polyethylene and first non-crosslinked polyethylene with no additive, the tensile strength was 16 MPa or lower and the elongation was 350% or less, which are lower values than in the Examples.

As shown in Comparative Examples 2-5, when the amount of ethylene vinyl acetate copolymer (EVA) or ethylene ethyl acrylate copolymer (EEA) was less than 0.1 part by weight or more than 3 parts by weight, the tensile strength was 16 MPa or lower and the elongation was 358% or less, which are lower values than in the Examples. The gel fraction was 29% or more in the respective Comparative Examples.

From these results, it was found that a polymer compound exhibiting high physical properties with tensile strength of 18 MPa or higher and tensile elongation of over 450% can be obtained by using 0.1 to 3 parts by weight of ethylene vinyl acetate copolymer (EVA) and/or ethylene ethyl acrylate copolymer (EEA) as an additive to 100 parts by weight of crosslinked polyethylene.

INDUSTRIAL APPLICABILITY

According to the present invention, use of an additive such as ethylene vinyl acetate copolymer (EVA) and ethylene ethyl acrylate copolymer (EEA) can produce a polymer compound with high physical properties. For example, it can be used in blow molding or foam molding, where high tensile strength and elongation are required.

DESCRIPTION OF REFERENCE CODE

| 10 | twin-screw extruder |
| 12 | cylinder |
| 13 | screws |
| 14 | drive section |
| 16 | first feeding section |
| 18 | first transport section |
| 20 | first kneading section |
| 22 | first degassing section |
| 24 | second feeding section |
| 26 | second transport section |
| 28 | second kneading section |
| 30 | second degassing section |
| 32 | third transport section |
| 34 | discharge section |

**Claims**

1. A method of producing a polymer compound by thermoplasticizing crosslinked polyethylene by an extruder, comprising the steps of:

mixing the crosslinked polyethylene, first non-crosslinked polyethylene and an additive to generate a mixture;
thermoplasticizing the crosslinked polyethylene by applying heat and shear stress to the mixture fed from a first feeding section of the extruder; and
kneading the mixture after the thermoplasticizing step and second non-crosslinked polyethylene fed from a second feeding section of the extruder;
wherein an amount of the first non-crosslinked polyethylene in the mixing step is 1 to 5 parts by weight per 100 parts by weight of the crosslinked polyethylene,

wherein the additive includes at least one non-crosslinked polymer compound selected from ethylene vinyl acetate copolymer, ethylene methyl acrylate copolymer, ethylene ethyl acrylate copolymer, ethylene methyl methacrylate copolymer, or ethylene ethyl methacrylate copolymer,

wherein an amount of the additive is 0.1 to 3 parts by weight per 100 parts by weight of the crosslinked polyethylene,

wherein the shear stress in the thermoplasticizing step is generated at a shear rate of 10,000 to 15,000 s$^{-1}$ for 5 to 30 seconds, and

wherein an amount of the second non-crosslinked polyethylene fed in the kneading step is 50 to 150 parts by weight per 100 parts by weight of the crosslinked polyethylene.

2. The method according to claim 1, wherein a melt flow index of the additive is 1 to 30 g/10 min.

3. The method according to claim 1, wherein tensile strength of the polymer compound after the kneading step is 18 MPa or higher and tensile elongation thereof is over 450%.

Fig.1

Fig.2

10

13 12

# Fig.3

```
                    START
                       │
                       ▼                S1
             PREPARATION PROCESS
                       │
                       ▼                S2
                MIXING PROCESS
                       │
                       ▼                S3
             FIRST FEEDING PROCESS
                       │
                       ▼                S4
          THERMOPLASTICIZATION PROCESS
                       │
                       ▼                S5
            SECOND FEEDING PROCESS
                       │
                       ▼                S6
               KNEADING PROCESS
                       │
                       ▼                S7
               DISCHARGE PROCESS
                       │
                       ▼
               POLYMER COMPOUND
```

# INTERNATIONAL SEARCH REPORT

| International application No. |
|---|
| **PCT/JP2023/023238** |

**A. CLASSIFICATION OF SUBJECT MATTER**

*C08J 3/18*(2006.01)i; *B29B 7/38*(2006.01)i; *C08J 11/24*(2006.01)i
FI:   C08J3/18 CES; B29B7/38; C08J11/24

According to International Patent Classification (IPC) or to both national classification and IPC

**B. FIELDS SEARCHED**

Minimum documentation searched (classification system followed by classification symbols)

C08J3/18; B29B7/38; C08J11/24

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2021-24904 A (REPY PLUS CO., LTD.) 22 February 2021 (2021-02-22)<br>claims, fig. 1-3 | 1-3 |
| A | JP 2021-116366 A (IKEX KK) 10 August 2021 (2021-08-10)<br>claims, fig. 1-3 | 1-3 |
| A | JP 2018-35247 A (MSC CO., LTD.) 08 March 2018 (2018-03-08)<br>claims, fig. 1-4 | 1-3 |
| A | JP 2001-131331 A (KABUSHIKI KAISHA TOYOTA CHUO KENKYUSHO) 15 May 2001 (2001-05-15)<br>claims, examples 1-4, fig. 1 | 1-3 |
| A | JP 2005-200573 A (HITACHI CABLE, LTD.) 28 July 2005 (2005-07-28)<br>claims, examples 1-4, fig. 1-2 | 1-3 |
| A | JP 2019-65092 A (JOTO TECHNO CO., LTD.) 25 April 2019 (2019-04-25)<br>claims, fig. 1-5 | 1-3 |

☑ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 August 2023** | **22 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
|---|
| **PCT/JP2023/023238** |

**C.     DOCUMENTS CONSIDERED TO BE RELEVANT**

| Category* | Citation of document, with indication, where appropriate, of the relevant passages | Relevant to claim No. |
|---|---|---|
| A | CN 114106441 A (SICHUAN UNIVERSITY) 01 March 2022 (2022-03-01) claims, fig. 1-6 | 1-3 |

Form PCT/ISA/210 (second sheet) (January 2015)

**INTERNATIONAL SEARCH REPORT**
Information on patent family members

International application No.

**PCT/JP2023/023238**

| Patent document cited in search report | | | Publication date (day/month/year) | Patent family member(s) | | | Publication date (day/month/year) |
|---|---|---|---|---|---|---|---|
| JP | 2021-24904 | A | 22 February 2021 | JP | 6735885 | B1 | |
| JP | 2021-116366 | A | 10 August 2021 | (Family: none) | | | |
| JP | 2018-35247 | A | 08 March 2018 | JP | 6150359 | B1 | |
| JP | 2001-131331 | A | 15 May 2001 | (Family: none) | | | |
| JP | 2005-200573 | A | 28 July 2005 | (Family: none) | | | |
| JP | 2019-65092 | A | 25 April 2019 | (Family: none) | | | |
| CN | 114106441 | A | 01 March 2022 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009197138 A

- JP 2021024904 A